# FASCICULE DE BREVET EUROPEEN

(11) **EP 0 427 578 B1**
(45) Date de publication et mention de la délivrance du brevet: **18.01.1995**
(21) Numéro de dépôt: 90402795.0
(22) Date de dépôt: 08.10.1990
(51) Int. Cl.: G01N 21/45, G03H 1/22

(54) **Dispositif de mesure par holographie de déviations de rayons lumineux dans des milieux transparents**
Holografische Vorrichtung zur Messung der Ablenkungen von Lichtstrahlen in durchsichtigen Medien
Holographic device for the measurement of deviations of light beams in transparent media

(30) Priorité: 09.11.1989 FR 8914827
(43) Date de publication de la demande: 15.05.1991
(73) Titulaire: INSTITUT FRANCAIS DU PETROLE, 92502 Rueil-Malmaison (FR)
(72) Inventeur: Verhoeven, Dean, F-92500 Rueil-Malmaison (FR)

(56) Documents cités:
- US-A- 4 249 823
- APPLIED PHYSICS LETTERS, vol. 44, no. 8, 15 avril 1984, pp. 723-725, New York, US; J. STRICKER et al.: "Holographic moire deflectometry - A method for stiff density fields analysis"
- PHYSICS LETTERS, vol. 62A, no. 1, juillet 1977, pp. 33-35 ; P.W. CHAN et al.:"Holographic schlieren investigation of laser-induced plasmas"
- OPTICS AND SPECTROSCOPY, vol. 47, no. 6, décembre 1979, pp. 653-655, New York, US; I.S. ZEILIKOVICH et al.: "Determination of the angles of deflection of beams of light in an inhomogeneity from holographic shear interference patterns"

## Description

La présente invention concerne un procédé et un dispositif pour mesurer par une technique holographique, la déviation des rayons lumineux dans des milieux transparents traversés par le faisceau d'un laser, et notamment d'objets inhomogènes dont l'indice de réfraction peut présenter de forts gradients de variation.

Le procédé et le dispositif selon l'invention s'appliquent notamment à l'étude des variations de l'indice de réfraction de substances inhomogènes (gazeuses, liquides ou solides), dans le but de connaître certaines de leurs propriétés et notamment leur composition, leur concentration ou leur température. Une application particulière intéressante de la présente invention est, par exemple, l'étude des mélanges turbulents dans les chambres de combustion de moteurs.

L'étude des propriétés d'objets transparents est en général menée par des moyens optiques en utilisant la propriété de tout objet transparent de dévier plus ou moins les rayons lumineux qui le traversent en fonction des variations dans son volume, de son indice de réfraction.

Pour mener à bien ces études, on dispose de plusieurs méthodes connues de déflectométrie (deflectometry). On peut utiliser la déflectométrie holographique, la technique dite du moiré (holographic moire), les mesures de déviations à faisceau simple, la technique de photographie de granulation laser encore connue des spécialistes sous le nom de "speckle pattern photography". Les techniques dites de moiré ou granulation laser sont similaires en ce qu'elles permettent l'enregistrement de la déviation de la lumière pour une analyse ultérieure. Leur résolution dans le temps est élevée de ce fait. Avec la technique dite du moiré, on ne peut mesurer à la fois qu'une seule composante de la déviation du faisceau dévié, et l'expérimentateur doit fixer au préalable la sensibilité et la résolution spatiale. La technique du moiré par holographie n'a pas ces inconvénients, mais la réduction des données, c'est-à-dire l'extraction des données intéressantes est relativement compliquée. La technique de photographie dite de granulation laser, permet de mesurer simultanément les deux composantes du faisceau dévié, mais une sensibilité élevée ne s'obtient qu'au détriment de la résolution spatiale et les valeurs de ces deux paramètres doivent être fixées avant de commencer la mesure. On utilise cette technique particulière en général pour l'étude d'objets dont le gradient de variation d'indice de réfraction est relativement peu élevé.

On sait aussi que les techniques dites de moiré ou de granulation laser ne sont pas applicables quand les variations d'indice de réfraction des objets examinés sont assez grandes pour causer un croisement des rayons lumineux avant la mesure de leur déviation. La technique dite de déviation de mono-faisceau échappe aussi aux inconvénients des techniques dites de moiré ou de granulation laser. Aucun croisement de rayons lumineux ne se produit quand on l'utilise, mais elle ne convient pas pour l'étude de phénomènes transitoires.

Des applications de ces méthodes connues pour l'étude des variations de l'indice de réfraction d'objets ou milieux transparents sont décrites dans les publications suivantes :
- J. Stricker et al, "Holographic Moire Deflectometry" in Appl. Phys. Lett. vol. 44 No. 8, 723-725;
- U. Koepf,"Applications of Speckling for measuring the deflection of Laser light by phase objects" in Opt. Comm. vol 5,No. 5, 347-350; et
- P.W. Chan et al, "Holographic Schlieren investigation of laser-induced plasma" Physics Letters, vol. 62A, no. 1, juillet 1977, pages 33-35.

Le procédé selon l'invention évite beaucoup d'inconvénients des techniques antérieures. Il permet la mesure des déviations angulaires subies par la lumière d'un laser ayant traversé un objet plus ou moins transparent de forme absolument quelconque et notamment d'une masse gazeuse, sur des hologrammes formés à partir de cet objet.

Il est caractérisé en ce qu'il comporte l'utilisation d'un système optique pour former une image réelle de l'objet holographié ou former des hologrammes de cet objet, d'au moins un diaphragme interposé dans un plan où se forme une image réelle desdits hologrammes, et d'un instrument de mesure angulaire pour mesurer des angles de déflexion de la lumière émanant des hologrammes, que l'on dispose derrière le diaphragme.

Suivant un mode de réalisation le système optique comporte au moins deux lentilles que l'on dispose de manière qu'une partie de l'image reconstruite à partir de chaque hologramme se forme sensiblement dans un plan focal objet du système optique, le diaphragme étant disposé sensiblement dans un plan focal image du système optique, l'instrument de mesure angulaire étant disposé de l'autre côté du diaphragme par rapport au système optique.

Suivant un mode de réalisation on réalise un enregistrement de chaque hologramme dudit objet sur un support sensible et le diaphragme est disposé dans un plan où se forme une partie de l'image réelle de chaque hologramme reconstitué, cette image étant obtenue en retournant ledit support sensible, ledit instrument de mesure angulaire étant disposé du côté du diaphragme opposé audit hologramme.

Le système optique peut comporter au moins deux lentilles que l'on dispose de manière qu'une partie au moins de l'objet étudié soit dans un plan focal objet du système optique, chaque support sensible étant positionné sensiblement dans le plan focal image du système optique.

L'instrument de mesure angulaire est disposé par exemple du côté du support sensible opposé au système optique. Chaque image est reconstituée par exemple à partir d'hologrammes au moyen d'un faisceau lumineux relativement large, un diaphrame étant interposé entre le support sensible et ledit instrument de mesure.

Suivant un mode de réalisation, on peut former plusieurs hologrammes de l'objet étudié en l'éclairant par plusieurs faisceaux lumineux ayant plusieurs orientations différentes et mesurer successivement les déviations angulaires des différents faisceaux d'orientations différentes en interposant un filtre spatial dans le plan focal image du système optique.

Il est possible aussi de mesurer les déviations angulaires en déplaçant chaque hologramme relativement à l'instrument de mesure angulaire ou bien en plaçant ledit instrument de mesure dans le plan focal image d'une lentille de distance focale relativement longue.

Le dispositif permettant de mettre en oeuvre la méthode est caractérisée en ce qu'il comporte un système optique pour former une image réelle de l'objet holographié ou former des hologrammes de cet objet, au moins un diaphragme interposé dans un plan où se forme une image réelle de l'objet, et un instrument de mesure angulaire pour mesurer des angles de déflexion de la lumière émanant des hologrammes, que l'on dispose derrière ce diaphragme.

Le dispositif comporte un réseau de diffraction pour éclairer l'objet à holographier suivant plusieurs orientations différentes et former plusieurs hologrammes différents de celui-ci.

Le procédé et le dispositif selon l'invention permettent un meilleur contrôle du croisement de rayons lumineux dans l'étude des objets dont l'indice de réfraction varie avec un fort gradient et/ou est sujet à des modifications rapides, tout en offrant la possibilité de choisir indépendamment l'une de l'autre la résolution spatiale et la sensibilité requises. Ceci est rendu possible par le fait que :
- la résolution spatiale est déterminée par l'ouverture du diaphragme employé pour former le faisceau d'exploration (scanning) de l'hologramme reconstruit,
- la sensibilité dans la mesure des déviations angulaires est indépendante de la résolution spatiale qui est définie par l'ouverture de ce diaphragme,
- le risque de croisement des rayons est très réduit du fait que le diaphragme peut être placé juste derrière l'objet et même dedans,
- la dynamique pratique de mesure des déviations angulaires offerte par la méthode selon l'invention, est plus large qu'avec les techniques interférométriques, car la mesure des déviations angulaires n'est pas plus difficile, que les déviations soient faibles ou grandes, ce qui n'est pas le cas, on le sait, quand les mesures s'effectuent par comptage de franges d'interférence,
- l'extraction des données utiles peut facilement être automatisée quand on applique le procédé selon l'invention.

D'autres caractéristiques et avantages du procédé et du dispositif selon l'invention apparaitront mieux à la lecture de la description ci-après de modes de réalisation décrits à titre d'exemples non limitatifs, en se référant aux dessins annexés où:
- la Fig.1 montre schématiquement le principe de la formation d'un hologramme d'un objet traversé par de la lumière cohérente;
- la Fig.2 montre schématiquement un premier mode de réalisation de l'appareillage où un système optique reçoit la lumière issue d'un hologramme formé à partir de l'objet étudié;
- la fig.3 montre schématiquement une variante du mode de réalisation précédent où le système optique est interposé entre un hologramme retourné et l'instrument de mesure;
- la Fig.4 montre schématiquement un second mode de réalisation où la lumière issue de l'objet traverse un système optique avant la formation des hologrammes;
- la Fig.5 montre schématiquement un premier mode de mesure de l'image reconstruite à partir de l'hologramme formé d'après le second mode de réalisation;
- la Fig.6 montre de façon aussi très schématique, l'enregistrement d'hologrammes multi-directionnels d'un objet transparent.

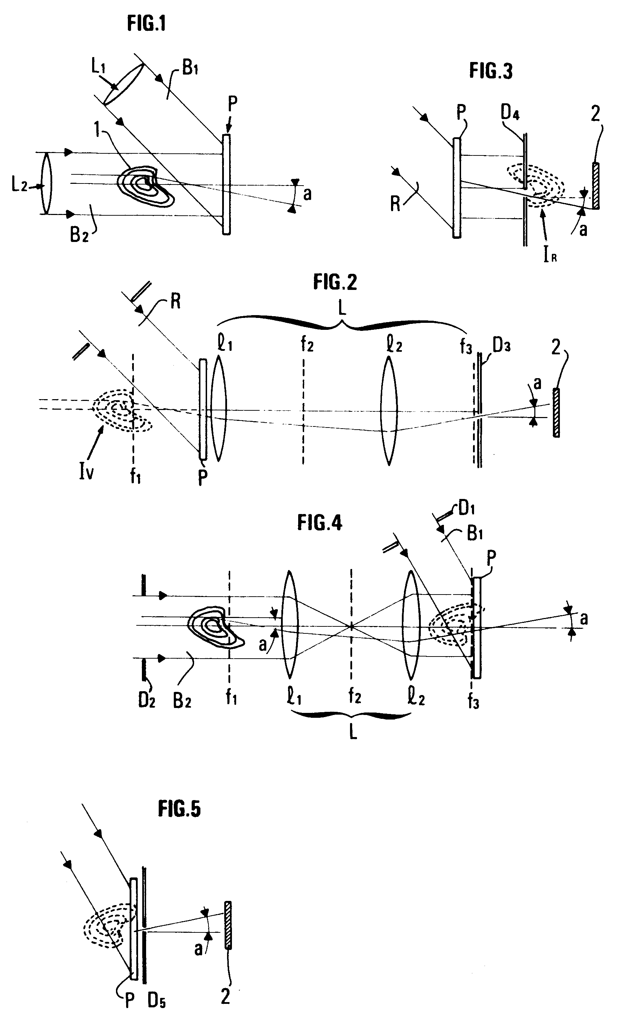

La formation d'hologrammes d'un objet, et notamment d'un objet translucide ou transparent 1 est, on le sait, réalisée en faisant interférer deux faisceaux lumineux B1 et B2 obtenus par division d'un faisceau émis par un laser. L'un d'eux (B1) sert de faisceau de référence. L'autre (B2) est dirigé au travers de l'objet à étudier. Les deux faisceaux, convenablement collimatés par deux lentilles L1 et L2 (Fig.1), interfèrent l'un avec l'autre et forment un hologramme que l'on peut enregistrer sur une plaque sensible P constituée, par exemple, d'une plaque photographique, d'une plaque thermo-plastique photo-sensible, etc.

Suivant le premier mode de réalisation de l'invention schématisé à la Fig. 2, on reconstruit l'image de l'hologramme enregistré en plaçant la plaque sensible P éclairée par un faisceau de reconstruction R, de manière que l'image virtuelle reconstruite Iv, se trouve dans le plan focal objet d'un système optique L constitué dans l'exemple représenté, par une paire de lentilles l1 et l2. La mesure des déviations des rayons lumineux est effectuée par un instrument de mesure approprié 2 que l'on dispose derrière un diaphragme D3 placé dans le plan focal image du système optique L. On utilise de préférence un détecteur optique d'un type connu déplaçable dans le plan d'observation, qui émet des signaux indicatifs de la position du rayon passant au travers du diaphragme D3, tel qu'un réseau fin de photo-diodes.

Suivant la variante de la Fig. 3, le système optique est constitué par un diaphragme étroit D4 interposé sur l'image réelle Ir de l'hologramme enregistré. Pour reconstituer cette image réelle Ir, on retourne la plaque sensible P dans le faisceau lumineux reconstructeur R. L'instrument de mesure 2 est placé derrière le diaphrame D4.

Suivant le second mode de réalisation de la Fig. 4, le système optique est utilisé au stade de l'enregistrement des hologrammes. A cet effet, l'objet à holographier 1 est placé dans le plan objet d'un système optique L comportant par exemple deux lentilles l1 et l2. Le faisceau traversant l'objet passe dans le système optique L et interfère avec le faisceau de référence. Une plaque sensible P (ou une caméra) permet de fixer chaque hologramme obtenu. Dans la phase de reconstruction, l'hologramme peut être parcouru optiquement par l'instrument de mesure 2 au travers d'une ouverture fine dans un diaphragme D5 (Fig.5).

Si l'on sait que l'objet 1 n'est pas susceptible de provoquer de croisement de rayons avant la formation de l'hologramme, on peut enregistrer celui-ci de la manière représentée à la Fig.1 et le lire comme indiqué à la Fig. 5.

Dans les deux modes de réalisation précédents, le déplacement à la fois de l'instrument de mesure 2 et des diaphragmes D3 ou D4 peut avoir des inconvénients. Une première solution consiste à déplacer seulement l'hologramme dans son plan. C'est l'objet reconstruit qui bouge et non le système optique. Une autre solution peut encore être d'interposer une lentille à longue focale entre le diaphragme D3 ou D4 et l'instrument de mesure 2, celui-ci étant placé au foyer image de cette lentille. Dans ce cas, l'instrument 2 mesure seulement la déflexion des rayons ayant traversé le diaphragme. Il n'est pas nécessaire de déplacer l'instrument 2 en même temps.

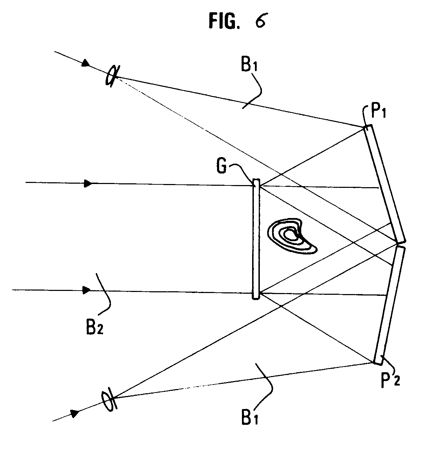

Le mode de réalisation de la Fig. 6 convient pour les objets transparents non symétriques, car il permet de reconstruire la distribution des valeurs de leur indice de réfraction au moyen d'une pluralité de faisceaux. A cet effet, on interpose sur le trajet du faisceau B2, un réseau G qui le divise en un certain nombre de faisceaux que l'on fait interférer avec des faisceaux de référence B. Les hologrammes H1,H2... formés sont enregistrés sur plusieurs plaques P1,P2... Pour leur reconstruction, on utilise le mode de réalisation de la Fig.2, par exemple, pour chacun des faisceaux ayant traversé l'objet. On interpose de préférence un filtre spatial passe-bas que l'on dispose dans le plan focal f2 de la lentille L1, pour sélectionner à volonté l'un quelconque des faisceaux reconstruits.

## Revendications

1. Procédé de déflectométrie holographique pour mesurer les déviations angulaires subies par la lumière d'un laser traversant un objet (1), comportant la formation sur un support sensible, d'hologrammes à partir de cet objet, caractérisé en ce qu'il comporte l'utilisation d'un système optique (l1, l2) pour former une image réelle de l'objet holographié ou former des hologrammes de cet objet, d'au moins un diaphragme (D3, D4) interposé dans un plan où se forme une image réelle desdits hologrammes, et d'un instrument de mesure angulaire (2) pour mesurer des angles de déflexion de la lumière émanant des hologrammes, que l'on dispose derrière ledit diaphragme.

2. Procédé selon la revendication 1, caractérisé en ce que le système optique comporte au moins deux lentilles (l1, l2) que l'on dispose de manière qu'une partie de l'image reconstruite à partir de chaque hologramme se forme sensiblement dans un plan focal objet du système optique, le diaphragme (D3) étant disposé sensiblement dans un plan focal image du système optique, ledit instrument de mesure angulaire (2) étant disposé de l'autre côté du diaphragme (D3) par rapport au système optique.

3. Procédé selon la revendication 1, caractérisé en ce que l'on réalise un enregistrement de chaque hologramme dudit objet sur un support sensible (P) et le diaphragme (D4) est disposé dans un plan où se forme une partie de l'image réelle de chaque hologramme reconstitué, cette image étant obtenue en retournant ledit support sensible, ledit instrument de mesure angulaire (2) étant disposé du côté du diaphragme opposé audit hologramme.

4. Procédé selon la revendication 1, caractérisé en ce que le système optique comporte au moins deux lentilles (l1, l2) que l'on dispose de manière qu'une partie au moins de l'objet étudié (1) soit dans un plan focal objet (f1) du système optique, chaque support sensible étant positionné sensiblement dans le plan focal image (f3) du système optique.

5. Procédé selon la revendication 4, caractérisé en ce que ledit instrument de mesure angulaire (2) est disposé du côté du support sensible opposé au système optique.

6. Procédé selon la revendication 5, caractérisé en ce que chaque image est reconstituée à partir d'hologrammes au moyen d'un faisceau lumineux relativement large, un diaphragme (D5) étant interposé entre le support sensible et ledit instrument de mesure.

7. Procédé selon l'une des revendications précédentes, caractérisé en ce que l'on forme plusieurs hologrammes de l'objet étudié en l'éclairant par plusieurs faisceaux lumineux (B1) ayant plusieurs orientations différentes.

8. Procédé selon les revendications 2 et 7, caractérisé en ce que l'on mesure successivement les déviations angulaires des différents faisceaux d'orientations différentes en interposant un filtre spatial dans le plan focal image du système optique.

9. Procédé selon l'une des revendications précédentes, caractérisé en ce que les déviations angulaires sont mesurées en déplaçant chaque hologramme relativement à l'instrument de mesure angulaire (2).

10. Procédé selon l'une des revendications 1 à 8, caractérisé en ce que les déviations angulaires sont mesurées en plaçant ledit instrument de mesure (2) dans le plan focal image d'une lentille de distance focale relativement longue.

11. Dispositif de déflectométrie holographique pour mesurer les déviations angulaires subies par la lumière d'un laser traversant un objet (1), comportant des moyens optiques pour former sur un support sensible des hologrammes à partir de cet objet, caractérisé en ce qu'il comporte un système optique (l1, l2) pour former une image réelle de l'objet holographié ou former des hologrammes de cet objet, au moins un diaphragme (D3, D4) interposé dans un plan où se forme une image réelle dudit objet, et un instrument de mesure angulaire (2) pour mesurer des angles de déflexion de la lumière émanant des hologrammes, que l'on dispose derrière ledit diaphragme.

12. Dispositif selon la revendication 11, caractérisé en ce qu'il comporte un réseau de diffraction (G) pour éclairer l'objet à holographier suivant plusieurs orientations différentes et former plusieurs hologrammes différents (H1, H2) de celui-ci.

## Patentansprüche

1. Verfahren zur holographischen Deflektometrie, um Winkelablenkungen, die durch das Licht eines Lasers, welches ein Objekt (1) durchquert, hervorgerufen sind, zu messen, umfassend die Formation von Hologrammen auf der Grundlage von diesem Objekt auf einem empfindlichen Träger, dadurch gekennzeichnet, daß es die Verwendung eines optischen Systems (11, 12) zum Bilden eines realen Bildes des Holographieobjektes oder zum Bilden von Hologrammen dieses Objektes, wenigstens eines Diaphragmas (D3, D4), das in einer Ebene, in welcher sich ein reales Bild der Hologramme bildet, zwischengefügt ist, und einer Winkelmeßeinrichtung (2) zum Messen von Winkelablenkungen des aus den Hologrammen hervorgehenden Lichtes, die hinter dem Diaphragma angeordnet ist, umfaßt.

2. Verfahren nach Anspruch 1, dadurch gekennzeichnet, daß das optische System wenigstens zwei Linsen (11, 12) umfaßt, die derart angeordnet werden, daß sich ein Teil des rekonstruierten Bildes auf der Grundlage von jedem Hologramm im wesentlichen in einer Objektfokalebene des optischen Systems bildet, wobei das Diaphragma (D3) im wesentlichen in einer Bildfokalebene des optischen Systems angeordnet wird, die Winkelmeßeinrichtung (2) auf der anderen Seite des Diaphragmas (D3) in Bezug auf das optische System angeordnet wird.

3. Verfahren nach Anspruch 1, dadurch gekennzeichnet, daß eine Aufzeichnung von jedem Hologramm des Objektes auf einem empfindlichen Träger (P) durchgeführt wird und das Diaphragma (D4) in einer Ebene angeordnet wird, in der sich ein Teil des realen Bildes von jedem wiederhergestellten Hologramm bildet, wobei dieses Bild durch Drehen des empfindlichen Trägers erhalten wird, die Winkelmeßeinrichtung (2) auf der dem Hologramm gegenüberliegenden Seite des Diaphragmas angeordnet wird.

4. Verfahren nach Anspruch 1, dadurch gekennzeichnet, daß das optische System wenigstens zwei Linsen (11, 12) umfaßt, die derart angeordnet werden, daß sich ein Teil wenigstens des untersuchten Objektes (1) in einer Objektfokalebene (f1) des optischen Systems befindet, wobei jeder empfindliche Träger im wesentlichen in der Bildfokalebene (f3) des optischen Systems positioniert wird.

5. Verfahren nach Anspruch 4, dadurch gekennzeichnet, daß die Winkelmeßeinrichtung (2) auf der dem optischen System gegenüberliegenden Seite des empfindlichen Trägers angeordnet wird.

6. Verfahren nach Anspruch 5, dadurch gekennzeichnet, daß jedes Bild auf der Grundlage von Hologrammen mittels eines verhältnismäßig großen Lichtbündels wiederhergestellt wird, wobei ein Diaphragma (D5) zwischen dem empfindlichen Träger und der Meßeinrichtung angeordnet wird.

7. Verfahren nach einem der vorhergehenden Ansprüche, dadurch gekennzeichnet, daß mehrere Hologramme des untersuchten Objektes durch Beleuchten mit mehreren Lichtbündeln (B1), die mehrere unterschiedliche Ausrichtungen aufweisen, gebildet werden.

8. Verfahren nach den Ansprüchen 2 und 7, dadurch gekennzeichnet, daß die Winkelablenkungen der verschiedenen Lichtbündel unterschiedlicher Ausrichtungen durch Zwischenschalten eines Raumfilters in der Bildfokalebene des optischen Systems aufeinanderfolgend gemessen werden.

9. Verfahren nach einem der vorhergehenden Ansprüche, dadurch gekennzeichnet, daß die Winkelablenkungen durch Verschieben jedes Hologramms relativ zu der Winkelmeßeinrichtung (2) gemessen werden.

10. Verfahren nach einem der Ansprüche 1 bis 8, dadurch gekennzeichnet, daß die Winkelablenkungen durch Anordnen der Meßeinrichtung (2) in der Bildfokalebene einer Linse von verhältnismäßig großer Brennweite gemessen werden.

11. Vorrichtung zur holographischen Deflektometrie, um Winkelablenkungen, die durch das Licht eines Lasers, welches ein Objekt (1) durchquert, hervorgerufen sind, zu messen, umfassend optische Einrichtungen zum Bilden von Hologrammen auf der Grundlage von diesem Objekt auf einem empfindlichen Träger, dadurch gekennzeichnet, daß sie ein optisches System (11, 12) zum Bilden eines realen Bildes des Holographieobjektes oder zum Bilden von Hologrammen dieses Objektes, wenigstens ein Diaphragma (D3, D4), das in einer Ebene, in welcher sich ein reales Bild des Objektes bildet, zwischengefügt ist, und eine Winkelmeßeinrichtung (2) zum Messen von Winkelablenkungen des aus den Hologrammen hervorgehenden Lichtes, die hinter dem Diaphragma angeordnet ist, umfaßt.

12. Vorrichtung nach Anspruch 11, dadurch gekennzeichnet, daß sie ein optisches Gitter (G) zum Beleuchten des Objektes umfaßt, um entsprechend mehrere unterschiedliche Ausrichtungen zu holographieren und mehrere verschiedene Hologramme (H1, H2) von diesem zu bilden.

## Claims

1. A method of holographic deflectometry for measuring angular deflections undergone by the light of a laser passing through an object (1), consisting in the formation of holograms of this object on a sensitive support, characterised in that it consists in using an optical system (11, 12) to form a real image of the holographed image or to form holograms of this object, at least one diaphragm (D3, D4) interposed in a plane in which a real image of the holograms is formed, and an angle measuring instrument (2) for measuring the angles of deflection of the light emanating from the holograms, which is arranged behind this diaphragm.

2. A method in accordance with claim 1, characterised in that the optical system comprises at least two lenses (11, 12) arranged in such a way that a part of the image reconstructed from each hologram is formed substantially in an object focal plane of the optical system, the diaphragm (D3) being located substantially in an image focal plane of the optical system, the angle measuring instrument (2) being located on the other side of the diaphragm (D3) from the optical system.

3. A method in accordance with claim 1, characterised in that a recording is made of each hologram of the object on a sensitive support (P) and the diaphragm (D4) is arranged in a plane in which a part of the real image of each reconstituted hologram is formed, this image being obtained by turning over the sensitive support, the angle measuring instrument (2) being located on the side of the diaphragm opposite to the hologram.

4. A method in accordance with claim 1, characterised in that the optical system comprises at least two lenses (L1, 12) arranged in such a way that at least a part of the object under study (1) is in an object focal plane (f1) of the optical system, each sensitive support being positioned substantially in the image focal plane (f3) of the optical system.

5. A method in accordance with claim 4, characterised in that this angle measuring instrument (2) is located on the side of the sensitive support opposite to the optical system.

6. A method in accordance with claim 5, characterised in that each image is reconstituted from the holograms by means of a relatively large light beam, a diaphragm (D5) being interposed between the sensitive support and the measuring instrument.

7. A method in accordance with one of the previous claims, characterised in that several holograms are made of the object under study by lighting it using several light beams (B1) having several different orientations.

8. A method in accordance with claims 2 and 7, characterised in that the angular deflections of the various beams with different orientations are measured in succession by interposing a space filter in the image focal plane of the optical system.

9. A method in accordance with one of the previous claims, characterised in that the angular deflections are measured by displacing each hologram in relation to the angle measuring instrument (2).

10. A method in accordance with one of claims 1 to 8, characterised in that the angular deflections are measured by placing the measuring instrument (2) in the image focal plane of a lens with a relatively long focal distance.

11. A holographic deflectometry device for measuring the angular deflections undergone by the light of a laser passing through an object (1), comprising optical means for forming holograms from this object on a sensitive support, characterised in that it comprises an optical system (l1, l2) for forming a real image of this object and an angle measuring instrument (2), arranged behind the diaphragm, for measuring the angles of deflection of the light emanating from the holograms.

12. A device in accordance with claim 11, characterised in that it comprises a diffraction network (G) for lighting the object to be holographed along several different orientations and forming several different holograms (H1, H2) of it.
